# FASCICULE DE BREVET EUROPEEN

(11) **EP 0 472 721 B1**
(45) Date de publication et mention de la délivrance du brevet: **26.01.1994**
(21) Numéro de dépôt: 91907268.6
(22) Date de dépôt: 15.03.1991
(51) Int. Cl.: F27D 11/10, H05B 7/11

(54) **FOUR ELECTRIQUE A COURANT CONTINU**
ELEKTRISCHER GLEICHSTROMLICHTBOGENOFEN
DIRECT CURRENT ELECTRIC FURNACE

(30) Priorité: 19.03.1990 FR 9003484
(43) Date de publication de la demande: 04.03.1992
(73) Titulaire: CLECIM, F-95864 Cergy-Pontoise Cédex (FR)
(72) Inventeur: JANIAK, Robert, André Lieu dit "La Loge", F-42660 Saint-Genest-Malifaux (FR); MEYSSON, Nicolas, F-74890 Fessy (FR)
(74) Mandataire: Le Brusque, Maurice
(86) Numéro de dépôt international: FR9100215
(87) Numéro de publication internationale: WO9114912

(56) Documents cités:
- EP-A- 231 880
- EP-A- 255 793
- EP-A- 269 465
- DE-A- 1 565 300
- FR-A- 382 457

## Description

L'invention a pour objet un four électrique à courant continu pour la fusion de matière brute métallique, spécialement de la ferraille.

On connaît depuis longtemps des fours électriques utilisés pour la fusion de ferraille ou autre matière brute et la réduction du bain métallique obtenu, avec addition éventuelle d'éléments d'alliage jusqu'à obtention d'un métal de composition déterminée.

D'une façon générale, un four électrique est constitué d'une cuve limitée par une paroi latérale et un fond recouvert d'une sole en matière réfractaire et fermée par un couvercle amovible en forme de voûte.

A l'intérieur de la cuve, pénètre au moins une électrode dite consommable, constituée généralement d'une barre en graphite. Chaque électrode est supportée par un bras s'étendant au-dessus de la voûte et est montée déplaçable verticalement de façon à traverser la voûte et à pouvoir descendre à l'intérieur de la matière brute chargée dans le four. Celle-ci, qui est constituée généralement par de la ferraille, est en contact avec au moins une électrode fixe traversant le fond et la sole réfractaire.

Dans le cas d'un four à courant alternatif monophasé ou d'un four à courant continu, l'électrode consommable et l'électrode de sole sont reliées aux deux pôles d'une source de courant.

Dans le cas d'un four à courant alternatif bi- ou triphasé, les électrodes consommables sont reliées aux pôles de la source de courant et la charge est en contact avec l'électrode de sole qui constitue le neutre du système.

Il se forme ainsi entre la charge et chaque électrode consommable un ou plusieurs arcs électriques, qui produisent la fusion de la ferraille et la formation d'un bain métallique dans le fond de la cuve.

Jusqu'à récemment, on utilisait surtout des fours alimentés en courant alternatif, mais on a constaté que l'alimentation des électrodes en courant continu apportait de nombreux avantages tels qu'une réduction de bruit et une augmentation du rendement énergétique du fait que l'on peut utiliser des tensions supérieures à celles permises en courant alternatif.

Tant que la charge est sous forme de ferraille, les électrodes pénètrent dans celle-ci en y creusant des puits qui déterminent une sorte d'isolement des arcs les uns par rapport aux autres et favorisent leur stabilité. En revanche, lorsque la charge est totalement fondue, les arcs qui sont soumis aux effets magnétiques créés par le passage du courant dans les électrodes, les conducteurs qui relient les électrodes à la source du courant et d'autres parties de l'installation, peuvent se former dans des directions imprévisibles et sont donc très instables.

La zone dans laquelle se forment les arcs et qui est à la température la plus élevée ne peut donc être maintenue au centre du four dont les parois et le fond peuvent être soumis à des températures excessives et à une usure importante du réfractaire.

La société déposante a déjà proposé, dans le document FR-A-2602320, déposé le 1er Août 1986 (correspondant à EP-A- 0 258 101), un procédé permettant, dans un four à courant continu, et même pour de grandes puissances, de contrôler la direction des arcs électriques. Le préambule de la revendication 1 est basé sur ce document.

A cet effet, au lieu d'écarter autant que possible les conducteurs du four de façon à éviter l'influence des champs magnétiques produits par le passage du courant, on fait passer au contraire les conducteurs reliés aux électrodes fixes le long de la face inférieure du fond et le plus près possible de celle-ci en déterminant le profil et l'orientation du chemin suivi par lesdits conducteurs de façon que le passage du courant produise des champs magnétiques dont les effets mutuels de déviation des arcs, compte tenu de l'ensemble des influences magnétiques exercées en fonctionnement par les autres conducteurs et les différentes parties de l'installation, soit tels que les arcs aient tendance à converger vers une zone déterminée du bain métallique.

Les intensités que l'on peut faire passer dans les conducteurs et les électrodes, en particulier les électrodes de sole, sont limitées et l'on doit donc utiliser plusieurs électrodes consommables et plusieurs électrodes de sole. Dans le document FR-A-2602320 déjà cité (correspondant à EP-A-0 258 101), plusieurs dispositions ont été envisagées, utilisant en particulier trois électrodes consommables et trois électrodes fixes.

La disposition et l'orientation des conducteurs des électrodes fixes sont déterminées par un calcul préalable tenant compte de la disposition générale de l'installation et, en particulier, des électrodes. Pour cela, on établit d'abord un modèle mathématique permettant de calculer les effets sur les arcs de tous les éléments parcourus par un courant électrique, en tenant compte des intensités, des caractéristiques magnétiques des différentes parties de l'installation, de l'évolution de la charge et des températures au cours des différentes phases de la fusion et en distinguant dans les calculs les éléments fixes dont les caractéristiques et le positionnement sont fixés à l'avance et les éléments variables sur lesquels on peut agir et l'on peut ainsi déterminer le cheminement des conducteurs en calculant à l'avance les effets prévisibles sur les arcs.

Parmi les éléments fixes, il faut citer en particulier la constitution générale du four, comme la forme de la cuve et de ses supports, les organes annexes tels que le trou de coulée et ses moyens de fermeture, les bras de support des électrodes consommables le long desquels passent généralement les conducteurs correspondants et la position de la source de courant qui, généralement, est placée aussi près que possible de la cuve de façon à limiter la longueur des conducteurs.

C'est pourquoi, dans le brevet précédent, on a principalement envisagé d'agir sur le cheminement des conducteurs en calculant, grâce au modèle mathématique, les différents effets magnétiques qui en résultent, de façon à déterminer la disposition optimale nécessitant une longueur minimale de conducteurs pour un contrôle efficace de la direction des arcs.

L'invention de brevet précédent permet ainsi de réaliser des fours à courant continu de grande capacité.

Jusqu'à une capacité de cent dix tonnes environ, il est possible d'utiliser une électrode consommable unique, l'intensité ne dépassant pas 100.000 Ampères environ. Dans ce cas, il est relativement simple, grâce au procédé indiqué plus haut, de contrôler la direction de l'arc et l'on utilise généralement trois électrodes fixes disposées symétriquement autour de la projection verticale de l'électrode consommable.

Mais au-dessus de cent dix tonnes environ, on doit utiliser des intensités qui conduisent à augmenter le nombre d'électrodes et, par conséquent, les risques de perturbations résultant des influences mutuelles des champs produits par le passage du courant des les nombreux conducteurs. La mise au point du modèle mathématiue devient alors très difficile compte tenu du grand nombre d'éléments dont il faut tenir compte et de leurs interactions.

Les études menées par la société déposante ont cependant conduit à une disposition particulièrement intéressante des électrodes et des conducteurs qui permet de réaliser des fours de très grande capacité, pouvant dépasser cent dix tonnes, tout en contrôlant de façon efficace la direction des arcs électriques.

Le four électrique selon l'invention comprend toutes les caractéristiques techniques de la revendication 1.

Dans un mode de réalisation préférentiel, le four comprend quatre électrodes fixes placées respectivement dans les quatre quadrants délimités par le plan médian et un plan transversal de référence perpendiculaire au plan médian et passant entre les électrodes consommables, à égale distance de celles-ci, les quatre électrodes fixes étant disposées sensiblement à des distances égales, respectivement, du plan médian et du plan transversal.

D'une façon générale, les électrodes consommables sont disposées suivant une ligne sensiblement parallèle au plan médian longitudinal de la cuve, décalée du côté de la source, et les électrodes fixes sont placées aux sommets d'un quadrilatère comprenant deux côtés sensiblement parallèles au plan médian et deux côtés coupant ledit plan et dont l'écartement est inférieur à celui des électrodes consommables de façon que celles-ci soient placées à l'extérieur dudit quadrilatère. Cependant, le positionnement exact des électrodes dépend de nombreux éléments et, notamment, de la position du trou de coulée qui doit être contourné à une certaine distance en raison de la chaleur dégagée.

Les électrodes consommables seront donc disposées dans une zone en forme de bande parallèle au plan médian et décalée latéralement du côté de la source,et les électrodes fixes seront placées elles-mêmes dans une zone en forme de bande rectangulaire comprise entre deux rectangles concentriques, respectivement intérieur et extérieur, dont les côtés sont respectivement parallèles et perpendiculaires au plan médian, les positions exactes des électrodes à l'intérieur desdites bandes étant déterminées par un calcul préalable tenant compte des influences mutuelles des différentes parties de l'installation de façon que, par compensation mutuelle des effets magnétiques du passage du courant, les arcs électriques soient soumis à des champs tendant à les diriger vers une zone déterminée du fond.

En particulier, pour un four de capacité supérieure à cent dix tonnes et des intensités pouvant dépasser 120.000 Ampères, la bande dans laquelle doivent se trouver les électrodes fixes a une largeur de 400 mm et est centrée sur un axe distant de 600 mm du plan médian, et la bande rectangulaire dans laquelle doivent se trouver les électrodes fixes a une largeur de 300 mm et est centrée sur un carré de côté égal à 2.500 mm, lui-même centré dans le plan médian et dans le plan transversal passant à égale distance des électrodes consommables, ces dernières étant écartées d'une distance comprise entre trois et quatre mètres.

Mais l'invention sera mieux comprise par la description suivante d'un mode de réalisation particulier en se référant aux dessins annexés.

La Figure 1 est une vue en coupe transversale d'un four selon l'invention.

La Figure 2 est une vue en coupe longitudinale du four.

La Figure 3 indique schématiquement les zones de positionnement des électrodes, en vue de dessus.

La Figure 4 montre, en vue de dessus, la disposition des électrodes et des conducteurs.

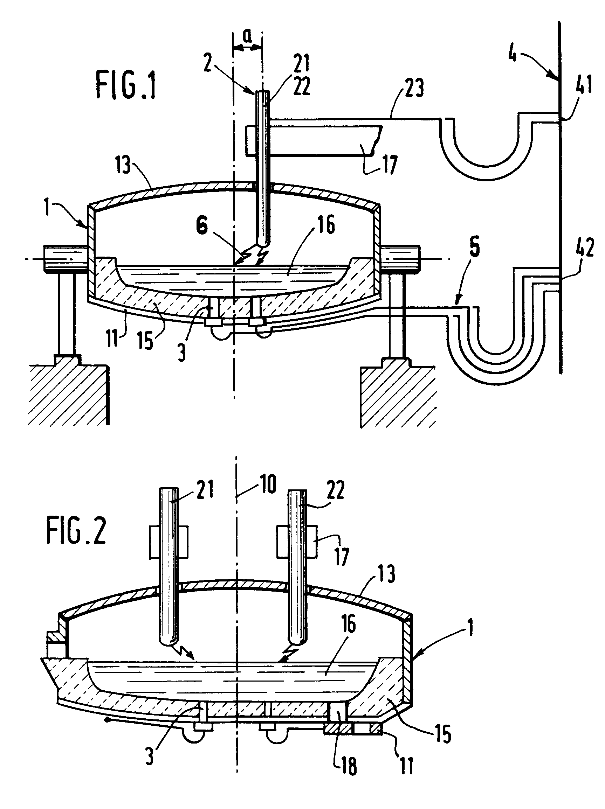

Sur la Figure 1, on a représenté schématiquement un four électrique de fusion de ferraille comprenant une cuve 1 limitée par un fond 11 et une paroi latérale 12 et fermée par un couvercle amovible en forme de voûte 13. La cuve est supportée par des appuis roulants ou pivotants 14 permettant de la faire basculer autour d'un axe horizontal de façon à déverser, par exemple, d'un côté le laitier par un seuil 15 et de l'autre côté le métal fondu 16 par un trou de coulée 18, comme on l'a représenté sur la Fig. 2.

Chaque électrode consommable 2 est portée par un bras 17 le long duquel est disposé le conducteur 23 reliant l'électrode 2 à une source de courant continu 4 placée, autant que possible, à proximité du four 1.

L'électrode consommable 2 est constituée d'une barre en graphite qui coulisse dans un support ménagé à l'extrémité du bras 17 et peut se déplacer verticalement de façon à pénétrer dans la cuve 1 en traversant la voûte 13.

Les moyens de support et de descente progressive des électrodes sont bien connus et n'ont pas été représentés en détail sur les Figures.

Le fond 11 de la cuve 1 est recouvert d'une sole 15 en matière réfractaire dans laquelle sont incorporées des électrodes fixes 3 qui traversent l'ensemble du fond 11. A proximité de la cuve 1, mais cependant à une distance suffisante pour être protégée de la chaleur et des projections de métal, est placée la source de courant continu 4, par exemple un transformateur-redresseur comprenant deux pôles, respectivement un pôle négatif 41 relié par des conducteurs d'alimentation 23 aux électrodes consommables 2, et un pôle positif 42 relié par des conducteurs de retour 5 aux électrodes de sole 3.

Grâce à ces dispositions bien connues, le passage du courant dans les électrodes entraîne la formation d'arcs électriques 6 entre les électrodes 2 et la ferraille qui, par fusion, forme un bain 16 de métal liquide. Le passage du courant est maintenu jusqu'à fusion complète et obtention, par addition d'éléments d'alliage, de la composition souhaitée.

Jusqu'à présent, il était habituel, dans les fours électriques, d'utiliser soit une électrode de graphite unique placée dans l'axe de la cuve, soit trois électrodes disposées généralement aux sommets d'un triangle equilatéral centré sur l'axe.

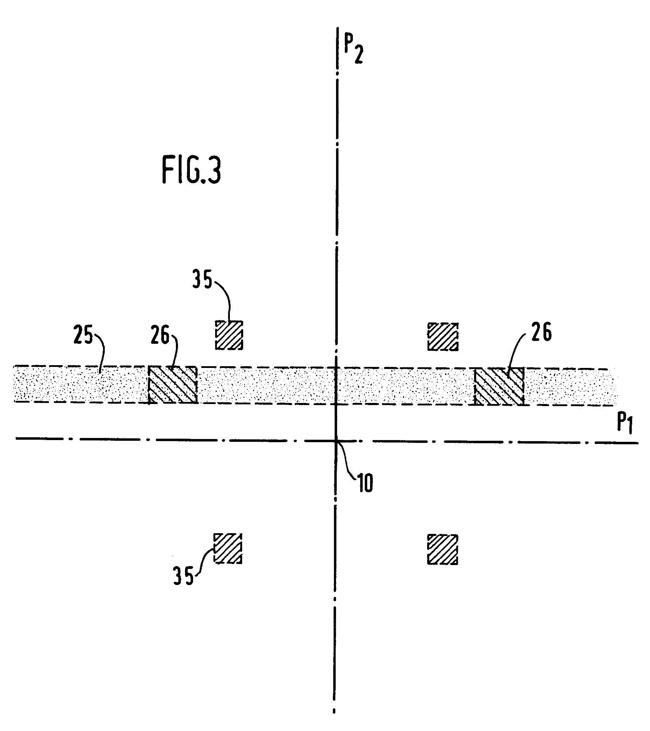

Dans l'invention, en revanche, on utilise seulement deux électrodes de graphite 21, 22, qui sont centrées sur ou à proximité d'une ligne 20 parallèle au plan médian longitudinal P1 de la cuve et décalée par rapport à celui-ci d'une distance a du côté de la source 4, comme on le voit sur les Fig. 1 et 3.

Les deux électrodes 21, 22, sont écartées l'une de l'autre d'une distance b qui, pour une capacité supérieure à cent tonnes, peut être de trois à quatre mètres.

Par ailleurs, on utilise quatre électrodes de sole 3 placées en deux paires de part et d'autre du plan longitudinal P1 et formant les sommets d'un quadrilatère encadré par les deux électrodes consommables 21, 22.

Sur la Figure 3, on a indiqué la disposition des électrodes par rapport à deux plans de référence, le plan médian longitudinal P1, qui est perpendiculaire à l'axe de basculement, et un plan transversal P2 perpendiculaire à P1,les deux plans se coupant suivant un axe vertical 10.

Les deux électrodes consommables 21, 22, sont placées de part et d'autre du plan transversal P2, à des distances b1, b2, et sont décalées du côté de la source, respectivement de distances a1 et a2, par rapport au plan longitudinal P1. Les distances a1 et a2 sont sensiblement égales, mais peuvent cependant varier dans une certaine fourchette, le positionnement exact étant déterminé par le calcul et dépendant, comme on l'a vu, de multiples facteurs.

On peut donc définir une zone 25 en forme de bande étroite parallèle au plan longitudinal P1 et dans laquelle peuvent se trouver les projections des axes des électrodes 21, 22.

En pratique, pour un four de capacité supérieure à cent dix tonnes, les distances a1 et a2 peuvent varier entre 400 et 800 mm, et les distances b1 et b2 peuvent varier entre 1500 et 2000 mm. La zone 25 dans laquelle peuvent se trouver les électrodes consommables a donc une largeur de 400 mm et est centrée sur un axe distant de 600 mm du plan médian P1.

A l'intérieur de cette zone 25, on définit deux zones rectangulaires 26 symétriques par rapport au plan P2 et dans lesquelles peuvent se trouver centrées respectivement les projections des deux électrodes consommables 21, 22, les positions exactes étant déterminées par le calcul.

Les positions des électrodes fixes sont également déterminées par rapport aux deux plans P1 et P2, chaque électrode 3 étant écartée d'une distance c de P1 et d'une distance d de P2.

D'une façon générale, les axes des électrodes 3 sont placés aux sommets d'un quadrilatère centré sur les deux plans P1 et P2, mais les positions exactes sont déterminées par les calculs, les distances c et d pouvant varier, pour chaque électrode 3, dans un certain intervalle.

On définit ainsi, par rapport aux plans de référence P1 et P2, deux zones rectangulaires 26 pour le positionnement des électrodes consommables 21, 22, et quatre zones rectangulaires 35 pour le positionnement des quatre électrodes fixes, respectivement 31,32, 33, 34.

Pour un four d'une capacité supérieure à cent dix tonnes, ces différentes zones seront définies ainsi :
- les deux électrodes consommables 21, 22, seront centrées de part et d'autre du plan P2, chacune dans une zone rectangulaire 26 limitée par deux côtés parallèles au plan longitudinal P1 et écartés du côté de la source respectivement de 400 mm et 800 mm, et deux côtés parallèles au plan transversal P2 et écartés de ce plan respectivement de 1500 mm et 2000 mm ;
- les quatre électrodes fixes 31, 32, 33, 34, seront centrées respectivement chacune dans l'un des quadrants limités par les plans P1 et P2, à l'intérieur de zones 35 en forme de carré limité par quatre côtés parallèles deux à deux aux plans P1 et P2 et distants de ces deux plans, respectivement, de 1000 mm et 1300 mm.

Normalement, le plan de référence P1 sera le plan médian longitudinal de la cuve 1, orthogonal à l'axe de basculement et dans lequel est centré le trou de coulée 18, celui-ci pouvant être remplacé par seuil prolongé par un bec de coulée par basculement.

Souvent, le plan transversal de référence P2 sera également un plan de symétrie, mais sa position pourra cependant varier en fonction des caractéristiques de la cuve et des positions respectives de ses différents organes. Par exemple, le chargement en matière brute peut se faire dans l'axe de la cuve, entre les deux électrodes, ou bien par un orifice décalé latéralement, en particulier lorsque la matière brute est de la ferraille. Dans ce cas, il est préférable de décaler les électrodes consommables pour qu'elles ne soient pas détériorées.

Les positions relatives à l'intérieur du four des électrodes consommables et fixes, de l'orifice de chargement et de l'orifice de coulée peuvent également être déterminées en fonction de diverses considérations technologiques, par exemple, pour réaliser un circuit des gaz permettant un préchauffage des ferrailles, pour faire converger les arcs vers une zone particulière du fond ou pour faire suivre aux courants électriques des chemins particuliers à l'intérieur du bain métallique.

En outre, les possibilités d'implantation des électrodes fixes dans le fond de la cuve sont également limitées car il faut tenir compte du positionnement des différents organes dont dépendent les chemins que l'on peut faire suivre aux conducteurs.

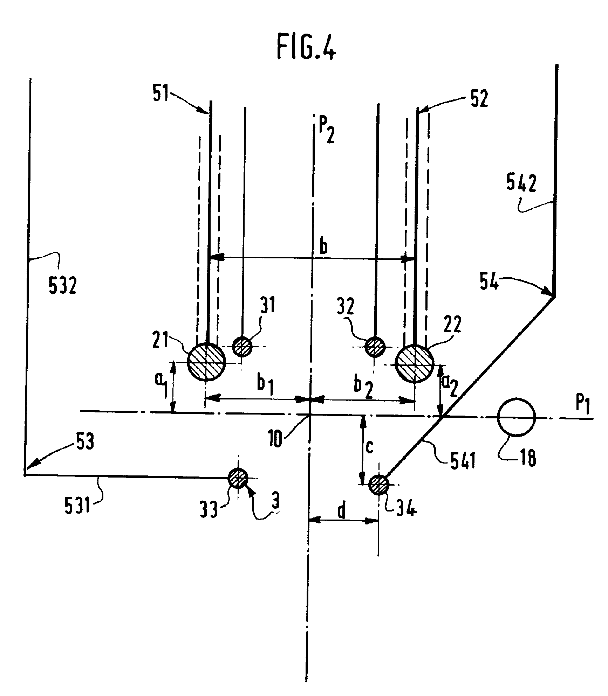

En effet, comme on l'a indiqué sur la Figure 4, les conducteurs d'alimentation 23 reliés aux électrodes consommables 21, 22 sont reliés directement vers la source 4 en suivant les bras de support 17, et sont donc, normalement, parallèles entre eux et perpendiculaires au plan P1. Le décalage vers la source 4 des électrodes 21, 22, permet de compenser les effets magnétiques dûs au passage du courant dans les conducteurs 23 en rapprochant les électrodes consommables 21 des électrodes fixes 31, 32, placées du côté de la source et qui sont reliées directement à celle-ci par des conducteurs de retour 51, 52, parallèles aux conducteurs d'alimentation 23 et au plan transversal P2.

En revanche, les conducteurs de retour 53, 54, reliés respectivement aux électrodes fixes 33, 34, suivent des chemins qui contournent les électrodes consommables 21, 22, placées respectivement du même côté du plan transversal P2.

Ainsi, le conducteur de retour 53 relié à l'électrode 33 comprend une première branche 531 qui s'éloigne de l'électrode 33 parallèlement au plan P1 et une seconde branche 532 qui rejoint la source 4 parallèlement au conducteur d'alimentation 2, à une distance d'environ quatre mètres du plan de référence P2 Cependant, le conducteur de retour 54 relié à l'électrode fixe 34 placée du côté du trou de coulée 18 comprend une première branche 541 qui s'écarte en oblique par rapport au plan P1 de façon à passer entre le trou de coulée 18 et la projection de l'électrode consommable 22, puis se raccorde à une seconde branche 542 parallèle au conducteur d'alimentation 23 de l'électrode 22.

Une telle disposition des électrodes et des conducteurs permet un équilibrage mutuel des effets magnétiques et notamment une compensation de l'effet des conducteurs aériens 23 de telle sorte que les arcs électriques qui se dirigent vers les électrodes fixes soient soumis à un effort de déviation minimal.

Par ailleurs, la source de courant 4 est constituée de générateurs-redresseurs dont on peut déterminer les branchements avec les différentes électrodes de façon à réaliser des passages de courant entre les électrodes de sole et les électrodes consommables correspondantes, entre deux électrodes de sole et l'électrode consommable placée du côté opposé, entre les électrodes de sole et entre les électrodes consommables. On peut ainsi créer à l'intérieur du bain de nombreux circuits électriques dirigés suivant des directions contrôlées, qui, grâce aux efforts magnétiques ainsi développés, déterminent une agitation hydrodynamique du bain métallique favorable au processus métallurgique.

## Revendications

1. Four électrique à courant continu comprenant :
- une cuve (1) constituée d'un fond (11) entouré par une paroi latérale (12) et recouverte par un couvercle amovible en forme de voûte (13), ladite cuve (1) étant symétrique par rapport à un plan médian vertical P1,
- des électrodes consommables (2) montées déplaçables verticalement chacune à l'extrémité d'un bras de support (17) s'étendant au-dessus de la voûte (13) et traversant celle-ci pour pénétrer dans la cuve,
- des électrodes fixes (3) traversant le fond (11),
- une source de courant continu (4) comprenant deux pôles, respectivement négatif (41) et positif (42), reliés par des conducteurs (23, 5) l'un aux électrodes consommables (2) et l'autre aux électrodes fixes (3),
- des moyens de chargement dans la cuve (1) d'une matière brute métallique pour la fusion de celle-ci par production d'arcs électriques,
- les conducteurs (23) reliés aux électrodes consommables (2) passant le long des bras de support (17) et les conducteurs (5) reliés aux électrodes fixes (3) passant le long de la face inférieure du fond (11) et étant dirigés suivant des chemins déterminés pour chaque électrode fixe (3) en fonction des influences magnétiques des différentes parties de l'installation,
caractérisé par le fait qu'il comprend deux électrodes consommables (21, 22) écartées l'une de l'autre et décalées latéralement toutes deux du côté du plan médian P1 de la cuve (1) tourné vers la source de courant (4), et au moins quatre électrodes fixes réparties de part et d'autre du plan médian et disposées sensiblement aux sommets d'un polygone régulier symétrique par rapport au plan médian et placé entre les projections verticales des électrodes consommables, les conducteurs des électrodes placées du côté de la source étant dirigés directement vers celle-ci, parallèlement aux conducteurs des électrodes consommables et les conducteurs des électrodes placées du côté opposé à la source comprenant chacun une première branche contournant la projection verticale de l'électrode consommable correspondante et une deuxième branche dirigée vers la source parallèlement aux conducteurs reliés aux électrodes consommables.

2. Four électrique selon la revendication 1, caractérisé par le fait qu'il comprend quatre électrodes fixes placées respectivement dans les quatre quadrants délimités par le plan médian et un plan transversal de référence perpendiculaire au plan médian et passant entre les électrodes consommables, à égale distance de celles-ci, les quatre électrodes fixes étant disposées sensiblement à des distances égales, respectivement, du plan médian et du plan transversal.

3. Four électrique selon l'une des revendications 1 et 2, caractérisé par le fait que les électrodes consommables (2) sont disposées dans une zone (25) en forme de bande parallèle au plan médian P1 et décalée latéralement du côté de la source (4) et que les électrodes fixes (31, 32, 33, 34) sont placées chacune dans une zone rectangulaire limitée par quatre côtés respectivement parallèles et perpendiculaires au plan médian, les positions exactes des électrodes à l'intérieur desdites zones étant déterminées par un calcul préalable tenant compte des influences mutuelles des différentes parties de l'installation de façon que, par compensation mutuelle des effets magnétiques du passage du courant, les arcs électriques soient soumis à des champs tendant à les diriger vers une zone déterminée du fond (11).

4. Four électrique selon l'une des revendications 1 et 2, caractérisé par le fait que, pour un four de capacité supérieure à 110 tonnes et des intensités pouvant dépasser 120.000 Ampères, les électrodes consommables (21, 22) sont placées dans une zone (25) ayant une largeur de 400 mm et centrée sur un axe distant de 600 mm du plan médian, et sont écartées l'une de l'autre d'une distance comprise entre 3 et 4 mètres, et que les électrodes fixes (31, 32, 33, 34) sont placées chacune à des distances des deux plans de référence P1 et P2, respectivement comprises entre 1000 et 1300 millimètres.

5. Four électrique selon l'une des revendications précédentes, caractérisé par le fait que la source de courant (4) est constituée de générateurs-redresseurs dont les branchements avec les différentes électrodes (21, 22, 31, 32, 33, 34) sont déterminés de façon à réaliser non seulement les passages de courant principaux entre deux électrodes fixes (31, 33) (32, 34) et l'électrode consommable (21)(22) placée du même côté du plan transversal P1, mais aussi au moins certains passages de courant secondaires entre deux électrodes fixes (32, 34) (31, 33) et l'électrode consommable (21) (22) placée du côté opposé, entre les deux électrodes consommables (21) (22) et entre les électrodes fixes (31, 32, 33, 34), de façon à créer à l'intérieur du bain différents circuits électriques suivant des directions contrôlées susceptibles de développer à l'intérieur du bain métallurgique, des efforts magnétiques déterminant une agitation hydrodynamique favorable au processus métallurgique.

## Claims

1. Direct current electric furnace comprising :
- a vessel (1) constituted by a bottom (11) surrounded by a lateral wall (12) and covered with a removable dome-shaped lid (13), said vessel (1) being symmetrical with respect to a vertical median plane P1,
- consumable electrodes (2) mounted so as to be capable of vertical displacement each at the end of a support arm (17) extending above the dome (13) and passing through the latter in order to enter the vessel,
- fixed electrodes (3) passing through the bottom (11),
- a direct current source (4) comprising two poles, negative (41) and positive (42) respectively, connected by conductors (23, 5) the one to the consumable electrodes (2) and the other to the fixed electrodes (3),
- means for loading into the vessel (1) a metal raw material for the melting of the latter by production of electric arcs,
- the conductors (23) connected to the consumable electrodes (2) passing along support arms (17) and the conductors (5) connected to the fixed electrodes (3) passing along the lower face of the bottom (11) and being directed along paths determined for each fixed electrode (3) in accordance with the magnetic effects of the various parts of the installation,
characterized by the fact that it comprises two consumable electrodes (21, 22) separated from one another and both offset laterally on the side of the median plane P1 of the vessel (1) turned towards the current source (4), and at least four fixed electrodes distributed on either side of the median plane and arranged substantially at the vertices of a regular polygon symmetrical with respect to the median plane and placed between the vertical projections of the consumable electrodes, the conductors of the electrodes placed towards the source being orientated directly towards the latter, parallel to the conductors of the consumable electrodes and the conductors of the electrodes placed on the side opposite to the source each comprising a first branch passing around the vertical projection of the corresponding consumable electrode and a second branch orientated towards the source parallel to the conductors connected to the consumable electrodes.

2. Electric furnace according to Claim 1, characterized by the fact that it comprises four fixed electrodes placed respectively in the four quadrants delimited by the median plane and a transverse reference plane perpendicular to the median plane and passing between the consumable electrodes, equidistant from the latter, the four fixed electrodes being arranged substantially at equal distances, respectively, from the median plane and from the transverse plane.

3. Electric furnace according to either of Claims 1 and 2, characterized by the fact that the consumable electrodes (2) are arranged in a zone having the form of a strip (25) parallel to the median plane P1 and offset laterally towards the source (4) and that the fixed electrodes (31, 32, 33, 34) are each placed in a rectangular zone limited by four sides parallel and perpendicular respectively to the median plane, the precise positions of the electrodes inside said zones being determined by a prior calculation taking into account the mutual effects of the various parts of the installation so that, by mutual compensation of the magnetic effects of the flowing of the current, the electric arcs are subjected to fields tending to direct them towards a determined zone of the bottom (11).

4. Electric furnace according to either of Claims 1 and 2, characterized by the fact that, for a furnace having a capacity of more than 110 tonnes and for intensities which may exceed 120,000 Amperes, the consumable electrodes (21, 22) are placed in a zone (25) having a width of 400 mm and centered on an axis at a distance of 600 mm from the median plane, and are separated from one another by a distance of between 3 and 4 meters, and that the fixed electrodes (31, 32, 33, 34) are each placed at distances from the two reference planes P1 and P2 of between 1000 and 1300 millimeters respectively.

5. Electric furnace according to one of the preceding claims, characterized by the fact that the current source (4) is constituted by rectifiers-generators the connections of which with the various electrodes (21, 22, 31, 32, 33, 34) are determined so as to produce not only the main current flows between two fixed electrodes (31, 33) (32, 34) and the consumable electrode (21) (22) placed on the same side of the transverse plane P1, but also at least certain secondary current flows between two fixed electrodes (32, 34) (31, 33) and the consumable electrode (21) (22) placed on the opposite side, between the two consumable electrodes (21) (22) and between the fixed electrodes (31, 32, 33, 34), so as to create inside the bath various electrical circuits along controlled directions capable of developing inside the metallurgical bath, magnetic forces determining a hydrodynamic stirring contributing to the metallurgical process.

## Patentansprüche

1. Elektrischer Gleichstromlichtbogenofen bestehend aus :
- einem Gefäss (1) mit einem von einer Seitenwand (12) umgebenden Boden (11), das durch einen als Deckengewölbe (13) ausgebildeter abnehmbarer Deckel verschlossen ist, wobei dieses Gefäss (1) zu einer senkrechten Mittelebene P1 symmetrisch ist,
- Abbrandelektroden (2), die senkrecht jeweils am Ende eines sich über dem Deckengewölbe (13) erstreckenden Stützarmes (17) verschiebbar montiert sind und dieses durchqueren um in das Gefässinnere einzudringen,
- feststehenden den Boden (11) durchquerenden Elektroden (3),
- einer Gleichstromquelle (4) mit zwei Polen, einem Minus- (41) bzw. Pluspol (42) , die über Leitungen (23, 5) jeweils mit den Abbrandolektroden (2) und den feststehenden Elektroden (3) verbunden sind,
- Mittel zum Beschicken des Gefässes (1) mit metallischem Rohmaterial zwecks Verschmelzen des selben durch Erzeugung von elektrischen Lichtbogen,
- wobei die mit den Abbrandelektroden (2) verbundenen Leitungen (23), die entlang der Stützarme (17) verlaufen und die mit den feststehenden Elektroden (3) verbundenen Leitungen (5), die entlang der Unterseite des Bodens (11) verlaufen und die gemäss Pfadeausgerichtet sind, welche entsprechend der Magnetfeldeinwirkungen der verschiedenen Anlagenteile für jede feststehende Elektrode (3) bestimmt sind.
dadurch gekennzeichnet, dass er zwei im Abstand von einander angeordnete, beide auf der zur Stromquelle (4) hin gerichteten Seite der Mittelebene P1 des Gefässes (1) seitlich versetzte Abbrandelektroden (21, 22) umfasst, sowie mindestens vier feststehende, beiderseits der Mittelebene verteilten Elektroden, die wesentlich symmetrisch zur Mittelebene an den Spitzen eines gleichmässigen Vielecks liegen, und zwischen den Senkrechtprojektionen der Abbrandelektroden angeordnet sind, wobei die Leitungen der auf der Seite der Stromquelle befindlichen Elektroden unmittelbar gegen diese und parallel zu den Leitungen der Abbrandelektroden gerichtet sind, und wobei die Leitungen der auf der entgegengesetzten Seite der Stromquelle befindlichen Elektroden je eine erete um die Senkrechtprojektion der entsprechenden Abbrandelektrode herum geführten Abzweigung und eine zweite zur Stromquelle hin gerichteten, parallel zu den mit den Abbrandelektroden verbundenen Leitungen angeordnete Abzweigung aufweist.

2. Elektroofen nach Anspruch 1, dadurch gekennzeichnet, dass er vier feststehende Elektroden aufweist, die jeweils in den vier durch die Mittelebene und durch eine senkrecht zur Mittelebene querverlaufende, zwischen den Abbrandelekroden in einem gleichmässigen Abstand der selben befindlichen Bezugsebene begrenzte Quadranten angeordnet sind, wobei die vier feststehenden Elektroden wesentlich in gleichmässigen Abständen jeweils von der Mittelebene und der Querebene montiert sind.

3. Elektroofen nach einem der Ansprüche 1 und 2, dadurch gekennzeichnet, dass die Abbrandelektroden (2) in einem als Streifen ausgebildeten Bereich (25) angeordnet sind, der parallel zur Mittelebene P1, auf der Seite der Stromquelle (4) seitlich versetzt ist, und dass die feststehenden Elektroden (31, 32, 33, 34) jeweils in einer rechteckigen, durch vier parallele bzw. senkrecht zur Mittelebene verlaufende Seiten begrenzte Zone angeordnet sind, wobei die genaue Lage der Elektroden innen in diesen Zonen unter Berücksichtigung der gegenseitigen Einwirkungen der verschiedenen Anlagenteile durch Vorkalkulation bestimmt werden, so dass durch gegenseitige Kompensation der Magnetfeldwirkungen des Stromdurchflusses Lichtbogen durch Magnetfelder derart beeinflusst werden, dass sie tendieren sich gegen eine bestimmte Zone des Bodens (11) zu richten.

4. Elektroofen nach einem der Ansprüche 1 und 2, dadurch gekennzeichnet, dass bei einem Ofen mit einem Fassungsvermögen über 110 Tonnen und möglichen Stromstärken über 120.000 Ampere die Abbrandeleketroden (21, 22) in einer 400 mm breiten Zone (25) angeordnet sind, die auf eine von der Mittelebene in einem Abstand von 600 mm liegenden Achse zentriert ist, und in einem Abstand zwischen 3 und 4 Meter von einander montiert sind, und dass die festehenden Elektroden (31, 32, 33, 34) jeweils in Abständen zwischen 1000 und 1300 Millimetern von den beiden Bezugsebenen P1 und P2 angeordnet sind.

5. Elektroofen nach einem der vorhergehenden Ansprüche, dadurch gekennzeichnet, dass die Stromquelle (4) aus Gleichrichter-Generatoren besteht, deren Zweigverbindungen mit den verschiedenen Elektroden (21, 22, 31, 32, 33, 34) so bestimmt werden, dass nicht nur Hauptstromdurchflüsse zwischen zwei feststehenden Elektroden (31, 33) bzw. (32, 34) und der auf der selben Seite der Querebene P1 angeordneten Abbrandelektrode (21) bzw. (22), sondern mindestens auch gewisse Sekundärdurchflüsse zwischen zwei feststehenden Elektroden (32, 34) bzw. (31, 33) und der auf der entgegengesetzten Seite angeordnete Abbrandelektrode (21) bzw. (22), zwischen den beiden Abbrandelektroden (21) (22) und zwischen den feststehenden Elektroden (31, 32, 33, 34) hergestellt werden, zwecks Erzeugung innen im Schmelzbad verschiedener Stromkreise gemäss kontrollierter Richtungen, die innen im Metallbad Megnetwirkungen erzeugen können, die ein für den Metallprozess günstiges hydrodynamisches Rühren bewirken.
